# EUROPEAN PATENT APPLICATION

(11) **EP 0 738 061 A2**
(43) Date of publication of application: **16.10.1996**
(21) Application number: 96850064.5
(22) Date of filing: 28.03.1996
(51) Int. Cl.: H04L 12/64

(54) **Device at communications system**

(30) Priority: 13.04.1995 SE 9501412
(71) Applicant: TELIA AB, S-123 86 Farsta (SE)
(72) Inventor: Alexius, Staffan, 241 93 Eslöv (SE); Wickman, Johan, 237 35 Bjärred (SE)
(74) Representative: Karlsson, Berne

(57) **Abstract**

A telecommunications system, for instance HIPERLAN, operates with asynchronous as well as synchronous communication and with an access function. The access function secures access guarantee to the communications medium for respective synchronous function after connection. The access system raises the spectrum efficiency, the capacity and the efficiency in the system. The access function also guarantees that the first type of nodes get a wanted predetermined bandwidth.

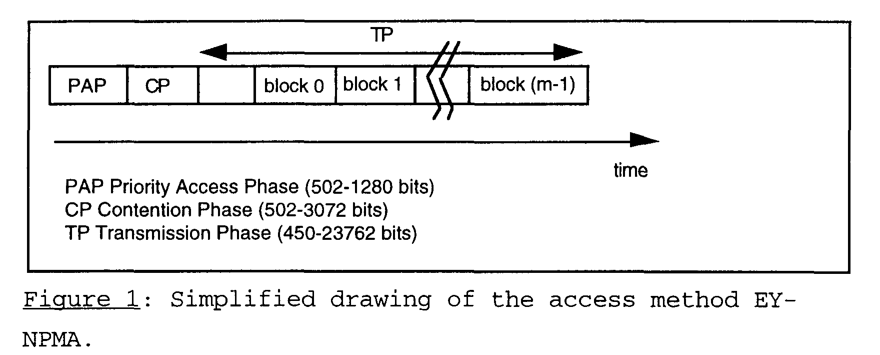

## Description

### TECHNICAL FIELD AND PROBLEM

The present invention is referable to a system which includes asynchronous as well as synchronous communication, for instance HIPERLAN (High Performance Local Area Network). This, however, makes special demands on the MAC (Medium Access Control)-protocol which is used for access to the communication medium. Asynchronous communication requires short response times on an average but can tolerate comparatively big variations round the average. For synchronous communication the case is the opposite. Synchronous communication can accept comparatively long delays but instead make great demands on that the variations round the average are small. I addition synchronous communication requires a guaranteed access to necessary transmission capacity during comparatively long periods of time.

The present invention shall among other things satisfy the need for centralized architecture in HIPERLAN to make possible that synchronous services such as speech and video will be guaranteed access to the communication medium after connection, which heavily raises the quality. One has previously suggested an access method which in principle is intended for asynchronous communication, which is suitable due to the development within the ATM-field. According to the invention the system HIPERLAN shall efficiently manage to carry ATM-traffic (ATM manages to carry synchronous traffic). At this is referred to the previous application, SE 9501151-6, with the same applicant and inventor.

The invention among other things relates to an access method for HIPERLAN which manages ATM-traffic better than present method EY-NPMA.

An advantage with system ISAK (compare the above mentioned patent application SE 9501151-6) is that synchronous traffic can reserve bandwidth forward in time and in that way guarantee synchronous traffic access to the medium after connection. The latter is a requirement for synchronous traffic type speech and video if it shall function with sufficiently high quality. ISAK also makes it possible to solve the problem with hidden nodes which is described in said patent application for ISAK.

The present invention at that solves the problem of making ISAK to a more spectum-efficient system than the in connection to ISAK previously suggested access method EY-NPMA. The invention also solves the problem that all mode 2 nodes can seize the whole available bandwidth.

HIPERLAN will in one embodiment consist of two modes, one of which is specified. The specified mode (mode 1) is intended for asynchronous communication and big packets. The other mode (mode 2) shall be adapted to synchronous communication such as speech, video, and spectrum-efficiently manage to carry ATM-packets of service class type A and B.

ATM service class A corresponds to connection oriented traffic with constant bit rate and where it exists a synchronization dependency between the end points. Examples of such traffic are 64 kbit/s speech channels and circuit-switched 2 Mbit/s signals according to G.702.

ATM service class B represents connection oriented traffic with a synchronization dependency and which supports variable bit rate. Speech and video encoders for variable bit rate are examples of service class B.

ATM-packets, however, are small compared with normal LAN-packets. This brings about certain problems since the two modes in spite of this efficiently shall manage to share the same channels.

Mode 1 can in one embodiment use an access method called EY-NPMA (Elimination Yield Nonpreemptive Priority Multiple Access). This access method includes three phases, PAP (Priority Access Phase), CP (Contention Phase) and TP (Transmission Phase), see Figure 1.

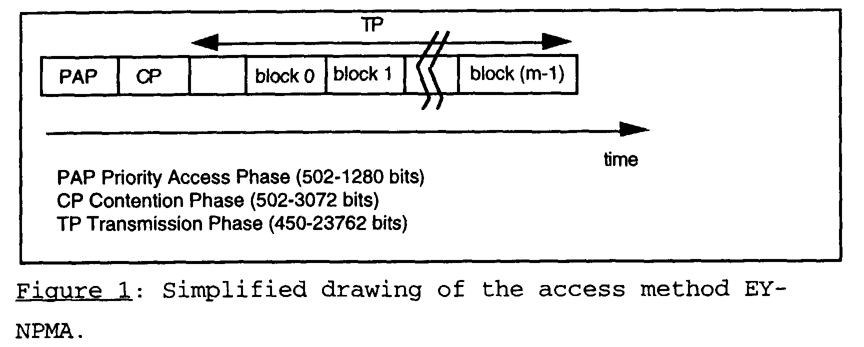

In the PAP the node transmits the priority (out of five different PAP priority levels) of the packet it wants to transmit. The priority is set by the MAC-layer by information from one or more overlaying OSI-layers.

In order to distinguish nodes which transmit packets with the same PAP-priority there is CP, in which the nodes compete for the medium. After CP there shall remain only one node which is allowed to transmit a packet in TP (A packet consists of one or more smaller blocks).

EY-NPMA does not guarantee the access to the communications medium for more than one following packet, which is required for synchronous services such as speech, video etc. Further EY-NPMA is a very spectrum-efficient access method for small packets. Efficiencies less than 2.20 for packets type ATM (53 bytes) are to be expected. Simulations have been performed where 90% of the packets are small (64 bytes) and 10% are big (1500 bytes); then the net bit rate in HIPERLAN will be about 5 Mbit/s out of a "raw" bit rate of 23.5 Mbit/s. The efficiency in this case will be barely 0.25.

Figure 2 describes the basic design of the access method ISAK which is based on the addition of a BRP (Bandwidth Reservation Phase) after PAP and CP. In BRP is among other things indicated how much bandwidth mode 2 node reserves after the node has got access to the medium. Suggested invention DRS accordingly is an extension of the basic design of ISAK.

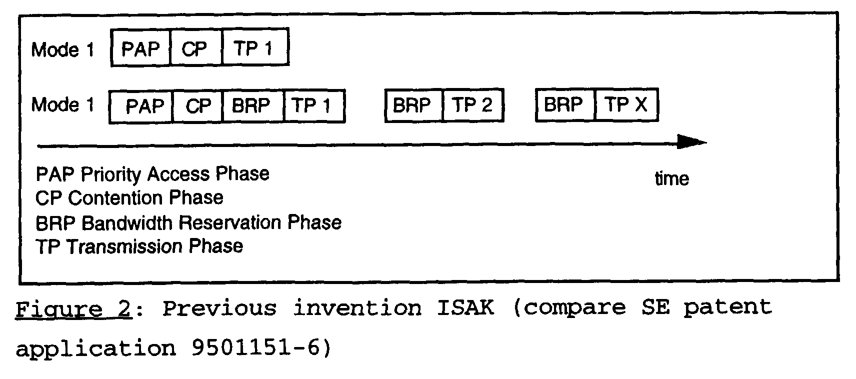

The device and the procedure according to the invention raises the spectrum efficiency for ISAK. The invention also includes a method which can be used for control of that mode 2 nodes don't have possibility to reserve the whole bandwidth.

PAP+CP consists on the average of about 2000 bits (can vary from some hundred to over 4000 bits). To transmit an ATM-packet the following amount of extra bits are required in TP: LBR (470 bits), bits for the channel equalizer (450 bits), MAC-overhead (400 bits). Total number of bits to transmit an ATM-packet 53 bytes (424 bits) consequently will be about 3500 bits.

Figure 3 shows a problem with ISAK where, if the time slot between two reservations doesn't have room for PAP+CP+TP, no node can transmit information there.

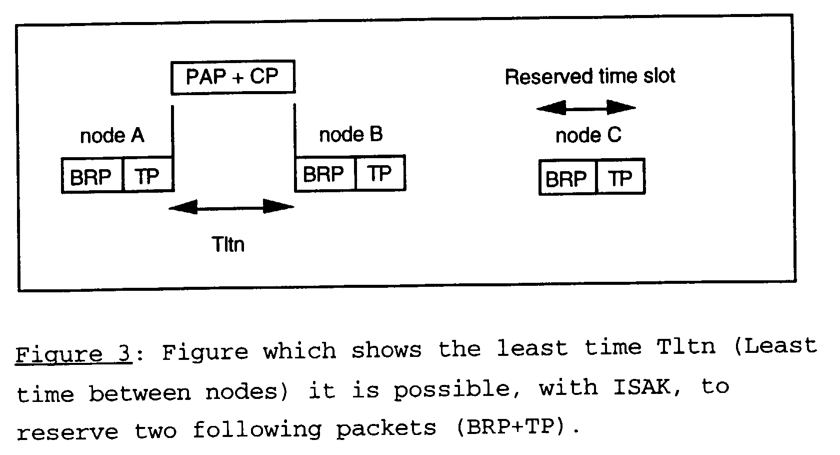

The time between two following TPs can in certain cases (at very small values of Tltn) not be utilized by mode 1 nodes or new mode 2 nodes since there will be no room for PAP+CP+TP within the time slot Tltn. The consequence is that spectrum will be inefficiently used. The invention (DRS) solves this problem.

There is a theoretical risk that mode 2 nodes reserve all available capacity, making mode 1 nodes "outrivaled". The invention includes a device and method which makes possible control and restriction of mode 2 nodes bandwidth reservations.

The invention consists of that mode 2 node:
- listens in the time interval x (for instance 10 ms) for BRP+TP, and registers the times TBRⁿ (Time Between Reservations) between reservations (BRP+TP). n=1....number of reservations - 1.
- selects the shortest TBRₘᵢₙ from TBRⁿ, (see Figure 4) which is the shortest interval in which there is room for the mode 2 node packet.
- in its first BRP (BRP 1) includes information in the message about the time y to the nearest following own BRP (BRP 2).
   The time y is selected so that the packet is placed within TBRₘᵢₙ. Further the packet shall be placed so that following BRP+TP (BRP 2,3...) as far as possible is located beside previous mode 2 reservation according to Figure 4. This in order to make possible to place BRP+TP on the best place from capacity point of view.
- places its BRP2(+TP) and following BRP(+TP) at equal repeating time intervals z (z different from or equal to y) between each other for instance 10 ms. The repeating intervals are indicated (as is described in ISAK) in BRP.
- If there is no TBRₘᵢₙ, node shall place BRP+TP side by side with by mode 2 nodes reserved time slots. If no previous reservations exist, BRP2 can be placed at just any place.
- is not allowed to transmit its first BRP (BRP1)(and by that reserve bandwidth) if the spectrum has been occupied by mode 2 nodes (detect BRP) q time units of the time x. The parameter q/x (for instance 0,25) should be fixed and the same for all mode 2 nodes.

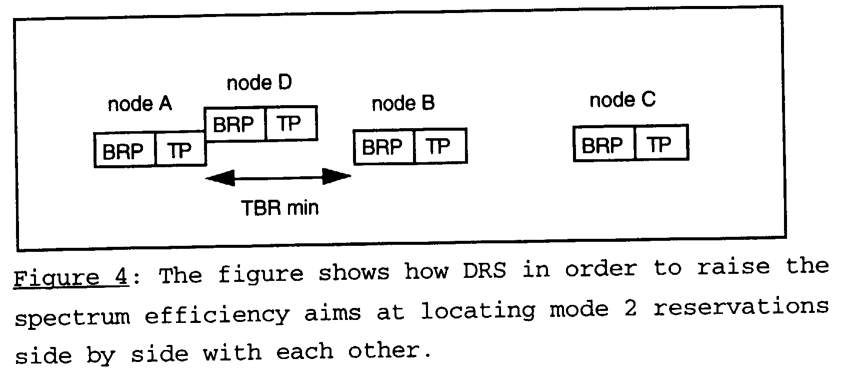

By DRS the spectrum efficiency for ISAK is raised considerably because it will be possible to fill up "hollows" in the time which was not possible before. Further mode 2 nodes "lumps" its information close to each other, which results in that the spectrum efficiency is further improved since nodes get bigger "hollows" in the time for PAP and CP.

With suggested access method synchronous services will be guaranteed access to the communications medium after connection. Further the spectrum efficiency, the capacity and the efficiency will increase for ISAK. The method also results in that mode 1 nodes always can be guaranteed a certain bandwidth.

The invention is intended for HIPERLAN and other decentralized systems for broad band short distance communications systems. Such systems can be used for LAN, LAN-interconnect, public access and possibly even in broad band local networks as cordless connection the last "100 m" to the subscriber.

Any previously known technology (beside Telia's patent application SE 9501151-6) to efficiently combine synchronous and asynchronous decentralized cordless systems does not exist.

The invention is not restricted to the above given examples but can be modified within the frame of the following patent claims and idea of invention.

## Claims

1. Device at tele- and/or data communications system (HIPERLAN) which operates with both asynchronous and synchronous communication and with an access function (DRS) **characterized** in that the access function is arranged to secure one or two or all of the following alternatives:
a) access guarantee to the communication medium for synchronous function(s) after connection,
b) raising of spectrum efficiency, capacity and/or efficiency of the system,
c) guarantee that a first type of nodes will get a wanted bandwidth.

2. Device according to patent claim 1,
**characterized** in that the access method prevents that a second type of nodes occupies the whole bandwidth.

3. Device according to patent claim 1 or 2,
**characterized** in that for the implementation of the access function are included device (mode 2 node) which:
a) listens in time intervals x (for instance 10 ms) for BRP+TP and registers the times TBRⁿ (Time Between Reservation) between reservations (BRP+TP). n=1...number of reservations - 1,
b) selects the shortest TBRₘᵢₙ from TBRⁿ, which is the shortest interval in which there is room for the mode 2 node packet, and
c) in its first BRP (BRP 1) includes information in the message of a time (Y) to nearest following own BRP (BRP 2).

4. Device according to patent claim 1, 2 or 3
**characterized** in that the time (y) is selected so that the packet is placed within TBRₘᵢₙ and that the packet is placed so that the following BRP+TP (BRP 2,3,...) as far as possible is located side by side with previous mode 2, which makes possible location of BRP+TP on a, from a capacity point of view, best place.

5. Device according to any of the previous patent claims, **characterized** in that device places its BRP2(+TP) and following BRP(+TP) at equal repeating time intervals z (z different from or equal to y) between each other, for instance 10 ms, at which repeating intervals are indicated in BRP.

6. Device according to any of the previous patent claims, **characterized** in that if there is no TBRₘᵢₙ, node shall place BRP+TP side by side with by mode 2 nodes reserved time slots, and that if there are no previously made reservations BRP2 can be placed at just any place.

7. Device according to any of the previous patent claims, **characterized** in that transmission of BRP (BRP 1) is not performed (and by that reserves bandwidth) if the spectrum has been occupied by mode 2 nodes (detect BRP) q time units of the time x, at which the parameter q/x (for instance 0,25) should be fixed and the same for all mode 2 nodes.

8. Device according to any of the previous patent claims, **characterized** in that the system consists of LAN, LAN-interconnect, public access system, and systems with broad band local networks which execute cordless connection the last length (100 m) to respective subscriber.

9. Procedure at tele- and/or data communications system with asynchronous and synchronous communication, for instance a combined synchronous and asynchronous decentralized cordless system, operating with the access function (DRS), **characterized** in that by the access function the spectrum efficiency for the system is increased by filling of "hollows" in the time, and/or is achieved accumulation of information close to each other by the first type (mode 2 nodes) of nodes.

10. Procedure according to patent claim 9,
**characterized** in that the spectrum efficiency is raised by nodes being allotted bigger "hollows" in the time for PAP and CP.
